# DEMANDE DE BREVET EUROPEEN

(11) **EP 0 735 116 A1**
(43) Date de publication de la demande: **02.10.1996**
(21) Numéro de dépôt: 96400605.0
(22) Date de dépôt: 22.03.1996
(51) Int. Cl.: C09C 1/02, C09C 1/00, C09C 3/06, C01G 25/00, C01F 17/00

(54) **Utilisation comme pigment colorant de composés à base de terbium**

(30) Priorité: 28.03.1995 FR 9503600
(71) Demandeur: RHONE-POULENC CHIMIE S.A., 92408 Courbevoie (FR)
(72) Inventeur: Pettini, Fabienne, 75019 Paris (FR); Seguelong, Thierry, 92800 Puteaux (FR)
(74) Mandataire: Dubruc, Philippe

(57) **Abrégé**

La présente invention concerne l'utilisation comme pigment colorant d'une composition comprenant un composé répondant à la formule ATbO₃ dans laquelle A désigne au moins un alcalino-terreux. Elle concerne aussi une composition à base d'un composé de même formule et qui comporte une couche enrobante à base d'au moins un oxyde transparent qui peut être plus particulièrement choisi parmi la silice, l'alumine, la zircone, le zircon, l'oxyde de titane et les oxydes de terres rares, ainsi que l'utilisation de celui-ci comme pigment colorant.

Ces pigments peuvent être utilisés plus particulièrement pour la coloration de matériaux du type plastiques, peintures, lasures, caoutchoucs, céramiques, glaçures, papiers, encres, produits cosmétiques, teintures, liants minéraux et revêtements stratifiés.

## Description

La présente invention concerne l'utilisation comme pigment colorant de composés à base de terbium ainsi que certains de ces composés.

Les pigments minéraux de coloration sont déjà largement utilisés dans de nombreuses industries notamment dans celles des peintures, des matières plastiques et des céramiques. Dans de telles applications, les propriétés que sont, entre autres, la stabilité thermique et/ou chimique, la dispersabilité (aptitude du produit à se disperser correctement dans un milieu donné), la compatibilité avec le milieu à colorer, la couleur intrinsèque, le pouvoir de coloration et le pouvoir opacifiant, constituent autant de critères particulièrement importants à prendre en considération dans le choix d'un pigment convenable.

Malheureusement, le problème est que la plupart des pigments minéraux qui conviennent pour des applications telles que ci-dessus et qui sont effectivement utilisés à ce jour à l'échelle industrielle, font généralement appel à des métaux (cadmium, plomb, chrome, cobalt notamment) dont l'emploi devient de plus en plus sévèrement réglementé, voire interdit, par les législations de nombreux pays, compte tenu en effet de leur toxicité réputée très élevée. On peut ainsi plus particulièrement citer, à titre d'exemples non limitatifs, le cas des pigments jaunes du type chromates ou antinomates de plomb.

On voit donc que la recherche, le développement et finalement la mise à disposition de nouveaux pigments minéraux de substitution constituent à ce jour un enjeu économique et industriel des plus importants.

L'objet de la présente invention est donc de fournir un pigment de substitution dans une gamme de couleur jaune.

Dans ce but, selon l'invention, on utilise comme pigment colorant une composition comprenant un composé répondant à la formule ATbO₃ dans laquelle A désigne au moins un alcalino-terreux.

L'invention couvre aussi une composition comprenant un composé de formule ATbO₃ tel que défini ci-dessus et une couche enrobante à base d'au moins un oxyde transparent.

D'autres caractéristiques, détails et avantages de l'invention apparaîtront encore plus complètement à la lecture de la description qui va suivre, ainsi que d'un exemple concret mais non limitatif destiné à l'illustrer.

Comme indiqué précédemment, on utilise dans le cadre de la présente invention un composé de formule ATbO3 dans laquelle A désigne un alcalino terreux.

A peut être plus particulièrement le baryum ou le strontium.

Les termes "composition comprenant un composé répondant à la formule ATbO₃" doivent être compris comme couvrant une composition ne comprenant que le composé de formule précitée ou comprenant ce composé avec d'autres.

Selon une variante de l'invention, le terbium est présent avec un autre élément M, notamment dans le composé même ATbO₃, en pouvant être en partie substitué par cet élément, M étant choisi parmi le cérium, le zirconium et le praséodyme.

Les proportions entre le terbium et l'autre élément M peuvent être quelconques et elles sont fixées en fonction de la couleur recherchée. A titre d'exemple, la proportion en % atomique autre élément/autre élement + terbium peut aller au moins jusqu'à 95%.

Dans les cas où la teneur en élément M est élevée, il se peut que la composition se présente sous la forme d'un mélange de deux phases du type ATbO₃ et AMO₃, dans chacune de ces phases Tb et M pouvant chacun être substitué en partie par l'autre élément.

On utilise de préférence un composé qui présente une granulométrie (taille moyenne de particules) d'au plus 5µm et encore plus particulièrement d'au plus 1µm.

L'invention concerne aussi une composition comprenant un composé de formule ATbO₃ tel que défini ci-dessus et une couche enrobante à base d'au moins un oxyde transparent.

Cette composition a l'avantage de présenter une stabilité thermique améliorée ainsi qu'une meilleure stabilité chimique dans des milieux comme l'eau (à pH neutre, basique ou faiblement acide) et les solvants organiques.

Par oxyde transparent, on entend ici un oxyde qui, une fois déposé sur le composé support sous la forme d'une pellicule plus ou moins fine, n'absorbe que peu ou pas du tout les rayons lumineux dans le domaine du visible, et ceci de manière à ne pas ou peu masquer la couleur intrinsèque d'origine dudit support. En outre, il convient de noter que le terme oxyde, qui est utilisé par commodité dans l'ensemble de la présente descripition, doit être entendu comme couvrant également des oxydes de type hydratés.

Ces oxydes, ou oxydes hydratés, peuvent être amorphes et/ou cristallisés.

L'oxyde transparent peut être plus particulièrement choisi, seul ou en mélange, parmi la silice, l'alumine, la zircone, le zircon, l'oxyde de titane et les oxydes de terres rares.

Par terre rare on entend ici les éléments du groupe constitué par l'yttrium et les éléments de la classification périodique de numéro atomique compris inclusivement entre 57 et 71. La classification périodique des éléments à laquelle il est fait référence est celle publiée dans le Supplément au Bulletin de la Société Chimique de France n° 1 (janvier 1966).

On notera que la couche périphérique enrobant la composition ou le composé support peut ne pas être parfaitement continue ou homogène. Toutefois, de préférence, les compositions selon l'invention sont constituées d'une couche de revêtement uniforme et d'épaisseur contrôlée d'oxyde transparent, et ceci de manière à ne pas altérer la couleur originelle du support avant enrobage.

Les compositions à couche d'oxyde présentent de préférence la même granulomètrie que celle donnée plus haut.

L'invention concerne aussi l'utilisation comme pigment colorant des compositions à couche d'oxyde qui viennent d'être décrites ci-dessus.

Les composés de formule ATbO₃ utilisés dans l'invention sont préparés par chamottage à une température de l'ordre de 1400°C. Les produits de départ qui sont utilisés dans les proportions stoechiométriques nécessaires sont des oxydes comme par exemple CeO₂, ZrO₂, Tb₄O₇, Pr₆O₁₁. On peut utiliser aussi des carbonates ou des nitrates. Après la calcination, les produits obtenus peuvent être broyés. On peut remarquer à ce sujet que les composés de formule ATbO₃ peuvent très facilement être désagglomérés si nécessaire pour obtenir la granulométrie mentionnée plus haut. Cette désagglomération peut se faire en utilisant des moyens de broyage doux tels que le broyage par jet d'air.

Un procédé de préparation des compositions à couche enrobante peut consister à mettre en présence le composé formant support de formule ATbO₃ et un précurseur de l'oxyde formant couche, et à précipiter cet oxyde. Les procédés de précipitation des oxydes et les précurseurs à utiliser sont connus.

Dans le cas de la silice on peut mentionner la préparation de la silice par hydrolyse d'un alkyl-silicate, en formant un milieu réactionnel par mélange d'eau, d'alcool, du support qui est alors mis en suspension, et éventuellement d'une base, et en introduisant ensuite l'alkyl-silicate ou bien encore une préparation par réaction du support, d'un silicate, du type silicate alcalin, et d'un acide.

Dans le cas d'une couche à base d'alumine, on peut faire réagir le support, un aluminate et un acide, ce par quoi on précipite de l'alumine. Cette précipitation peut aussi être obtenue en mettant en présence et en faisant réagir le support, un sel d'aluminium et une base.

Enfin, on peut former l'alumine par hydrolyse d'un alcoolate d'aluminium.

Pour ce qui est de l'oxyde de titane, on peut le précipiter en introduisant dans une suspension aqueuse du support un sel de titane d'une part tel que TiCl4, TiOCl2 ou TiOSO4, et une base d'autre part. On peut aussi opérer par hydrolyse d'un titanate d'alkyle.

Enfin, dans le cas d'une couche à base d'oxyde de zirconium, il est possible de procéder par co-hydrolyse, dans une suspension aqueuse du support, d'un alcoolate de zirconium d'une part et d'un alcoolate de silicium d'autre part, et ceci en présence de fluorure de sodium NaF. On récupère le pigment ainsi formé puis on calcine ce pigment de manière à transformer la couche d'enrobage précipitée en une phase de zircon, NaF jouant alors un rôle de fondant aidant à réaliser ladite transformation à la température la plus basse possible.

Les compositions décrites ci-dessus possèdent un très bon pouvoir de coloration et un très bon pouvoir opacifiant, et, de ce fait, conviennent à la coloration de nombreux matériaux, tels que plastiques et peintures.

Ainsi, et plus précisément encore, elles peuvent être utilisées dans la coloration de matières plastiques qui peuvent être du type thermoplastiques ou thermodurcissables.

Comme résines thermoplastiques susceptibles d'être colorées selon l'invention, on peut citer, à titre purement illustratif, le chlorure de polyvinyle, l'alcool polyvinylique, le polystyrène, les copolymères styrène-butadiène, styrène-acrylonitrile, acrylonitrilebutadiène-styrène (A.B.S.), les polymères acryliques notamment le polyméthacrylate de méthyle, les polyoléfines telles que le polyéthylène, le polypropylène, le polybutène, le polyméthylpentène, les dérivés cellulosiques tels que par exemple l'acétate de cellulose, l'acéto-butyrate de cellulose, l'éthylcéllulose, les polyamides. Les produits décrits conviennent tout particulièrement bien pour le chlorure de polyvinyle, le polypropylène et l'A.B.S.

Concernant les résines thermodurcissables pour lesquelles les compositions décrites conviennent également, on peut citer, par exemple, les phénoplastes, les aminoplastes notamment les copolymères urée-formol, mélamine-formol, les résines époxy et les polyesters thermodurcissables.

On peut également mettre en oeuvre les compositions décrites dans des polymères spéciaux tels que des polymères fluorés en particulier le polytétrafluoréthylène (P.T.F.E.), les polycarbonates, les élastomères silicones, les polyimides, les polyesters saturés tels que les P.E.T, P.B.T et les polyacétals tels que le P.O.M..

Dans cette application spécifique pour la coloration des plastiques, on peut mettre en oeuvre les compositions décrites directement sous forme de poudres. On peut également, de préférence, les mettre en oeuvre sous une forme pré-dispersée, par exemple en prémélange avec une partie de la résine, sous forme d'un concentré pâte ou d'un liquide ce qui permet de les introduire à n'importe quel stade de la fabrication de la résine. Ce dernier point constitue un avantage particulièrement important des composés décrits.

Ainsi, les compositions décrites peuvent être incorporées dans des matières plastiques telles que celles mentionnées ci-avant dans une proportion pondérale allant généralement soit de 0,01 à 5% (ramenée au produit final) soit de 40 à 70% dans le cas d'un concentré.

Les compositions décrites peuvent être également utilisées dans le domaine des peintures et lasures et plus particulièrement dans les résines suivantes : résines alkydes dont la plus courante est dénommée glycérophtalique; les résines modifiées à l'huile longue ou courte; les résines acryliques dérivées des esters de l'acide acrylique (méthylique ou éthylique) et méthacrylique éventuellement copolymérisés avec l'acrylate d'éthyle, d'éthyl-2 hexyle ou de butyle; les résines vinyliques comme par exemple l'acétate de polyvinyle, le chlorure de polyvinyle, le butyralpolyvinylique, le formalpolyvinylique, et les copolymères chlorure de vinyle et acétate de vinyle ou chlorure de vinylidène; les résines aminoplastes ou phénoliques le plus souvent modifiées; les résines polyesters; les résines polyuréthanes; les résines époxy; les résines silicones.

Généralement, les compositions décrites sont mises en oeuvre à raison de 5 à 30% en poids de la peinture, et de 0,1 à 5% en poids du lasure.

On peut utiliser plus particulièrement les compositions enrobées d'une couche d'oxyde transparent pour la coloration des matières céramiques, comme par exemple les porcelaines, les faïences et les grès, et ceci soit par coloration à coeur de la céramique (mélange physique entre la poudre céramique et le pigment), soit par coloration uniquement de la surface de cette dernière au moyen de glaçures (compositions verrières de revêtement) contenant le pigment.

Dans cette application, la quantité de composition mise en oeuvre est généralement comprise entre 1 et 30% en poids par rapport soit à l'ensemble de la céramique, soit par rapport à la glaçure seule.

Les compositions décrites peuvent aussi être utilisées pour la coloration d'un liant minéral.

Ce liant minéral peut être choisi parmi les liants hydrauliques, les liants aériens, le plâtre et les liants du type sulfate de calcium anhydre ou partiellement hydraté.

Par liants hydrauliques, on entend les substances ayant la propriété de faire prise et de durcir après addition d'eau en formant des hydrates insolubles dans l'eau.

L'invention s'applique tout particulièrement à la coloration des ciments et bien entendu des bétons fabriqués à partir de ces ciments par addition à ceux-ci d'eau, de sable et/ou de graviers.

Dans le cadre de la présente invention, le ciment peut, par exemple, être du type alumineux. On entend par là tout ciment contenant une proportion élevée soit d'alumine en tant que telle soit d'aluminate soit des deux. On peut citer à titre d'exemple les ciments à base d'aluminate de calcium, notamment ceux du type SECAR.

Le ciment peut aussi être du type silicate et plus particulièrement à base de silicate de calcium. On peut donner à titre d'exemple les ciments PORTLAND et, dans ce type de ciments, les Portland à prise rapide ou très rapide, les ciments blancs, ceux résistant aux sulfates ainsi que ceux comprenant des laitiers de hauts-fourneaux et/ou des cendres volantes et/ou du méta-kaolin.

On peut aussi mentionner les ciments à base d'hémihydrate, de sulfate de calcium ainsi que les ciments magnésiens dits ciments de Sorel.

L'invention s'applique aussi à la coloration des liants aériens, c'est à dire des liants durcissant à l'air libre par l'action du CO₂, du type oxyde ou hydroxyde de calcium ou de magnésium.

L'invention s'applique enfin à la coloration du plâtre et des liants du type sulfate de calcium anhydre ou partiellement hydraté (CaSO₄ et CaSO₄, 1/2H₂O).

Enfin, les compositions décrites sont également susceptibles de convenir pour des applications dans l'industrie du caoutchouc, notamment dans les revêtements pour sols, dans l'industrie du papier et des encres d'imprimerie, dans le domaine de la cosmétique, ainsi que nombreuses autres utilisations comme par exemple, et non limitativement, la teinture, le finissage des cuirs et les revêtements stratifiés pour cuisines et autres plans de travail.

La présente invention couvre enfin les compositions de matière colorées notamment du type plastiques, peintures, lasures, caoutchoucs, céramiques, glaçures, papiers, encres, produits cosmétiques, teintures, liants minéraux et revêtements stratifiés, qui comprennent des compositions selon l'invention.

Un exemple va maintenant être donné.

Dans cet exemple, les coordonnées chromatiques L*, a* et b* sont données ici et pour le reste de la description dans le système CIE 1976 (L*, a* et b*) tel que défini par la Commission Internationale d'Eclairage et répertorié dans le Recueil des Normes Françaises (AFNOR), couleur colorimétrique n° X08-12 (1983). Elles sont déterminées pour ce qui concerne les mesures faites sur les produits et les plastiques au moyen d'un colorimètre commercialisé par la Société Pacific Scientific. La nature de l'illuminant est le D65. La surface d'observation est une pastille circulaire de 12,5 cm² de surface. Les conditions d'observations correspondent à une vision sous un angle d'ouverture de 10°. Dans les mesures données, la composante spéculaire est exclue. Pour les mesures faites sur les peintures, le colorimètre utilisé est un Data Color et l'illuminant le C10.

L* donne une mesure de la réflectance (nuance clair/sombre) et varie ainsi de 100 (blanc) à 0 (noir).
a* et b* sont les valeurs des tendances colorées :
a* positif = rouge
a* négatif = vert
b* positif = jaune
b* négatif = bleu

L* représente donc la variation du noir au blanc, a* la variation du vert au rouge et b* la variation du jaune au bleu.

### Exemple

### Préparation des produits

On prépare différents produits par réaction en phase solide par mélange dans un creuset d'agathe d'oxydes CeO₂, Tb₄O₇ (Rhône-Poulenc) et de carbonates BaCO3, SrCO3 (Prolabo Rectapur) dans les proportions stoéchiométriques désirées. On pastille à 0,5 tonne/cm². On calcine sous oxygène suivant un cycle thermique en deux paliers l'un de 10h. à 1400°C puis l'autre de 5h. à 1000°C. Les pastilles obtenues sont désagglomérées et se présentent sous forme d'une poudre de diamètre moyen de 1µm. La poudre est caractérisée par colorimétrie (Réflexion diffuse).

On donne dans le tableau ci-dessous les caractérisations colorimétriques des phases obtenues

| Phase | L* | a* | b* |
|---|---|---|---|
| SrCe_{0,95}Tb_{0,05}O₃* | 81,79 | 2,67 | 54,34 |
| SrTbO₃ | 80,05 | -2,33 | 75,47 |
| BaTbO₃ | 81,27 | 10,63 | 90,94 |

| | | | |
|---|---|---|---|
| * Mélange de phases | | | |

### Utilisation des produits en peinture

Le produit BaTbO₃ tel qu'obtenu plus haut est incorporé dans une peinture alkyde mélamine à raison de 36% en poids. La peinture est ensuite cuite 30 minutes à 135°C.

On détermine les coordonnées chromatiques de la peinture telle qu'obtenue ci-dessus, c'est à dire en ton plein ainsi que des peintures pour lesquelles on a effectué un coupage au blanc en incorporant de l'oxyde de titane. On donne les résultats ci-dessous.

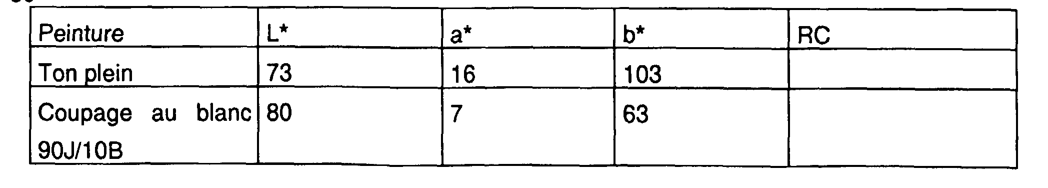

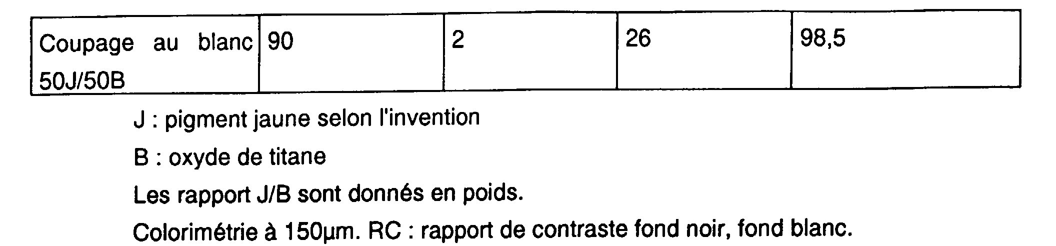

On observe que même avec un coupage au blanc à 50%, on obtient encore une valeur de b* suffisamment élevée pour donner une couleur jaune soutenue. Le RC reste élevé ce qui traduit un bon pouvoir couvrant.

### Utilisation en plastique

Le produit BaTbO₃ tel qu'obtenu plus haut est incorporé dans une proportion en poids de 1% dans du polypropylène. On forme des éprouvettes par injection à 240°C.

La mesure des coordonnées chromatiques est effectuée sur fond blanc. On obtient les valeurs suivantes :
L* = 61,05; a* = 0,16; b* = 56,62

## Revendications

1. Utilisation comme pigment colorant d'une composition comprenant un composé répondant à la formule ATbO₃ dans laquelle A désigne au moins un alcalino-terreux.

2. Utilisation selon la revendication 1, caractérisée en ce que le terbium est présent avec un élément choisi parmi le cérium, le zirconium et le praséodyme.

3. Utilisation selon l'une des revendications précédentes, caractérisée en ce que le composé présente une granulométrie d'au plus 5µm.

4. Utilisation selon l'une des revendications précédentes, caractérisée en ce que le composition précitée comporte une couche enrobante à base d'au moins un oxyde transparent.

5. Utilisation selon la revendication 4, caractérisée en ce que l'oxyde transparent précité est choisi, seul ou en mélange, dans le groupe constitué par la silice, l'alumine, la zircone, le zircon, l'oxyde de titane et les oxydes de terres rares.

6. Utilisation selon la revendication 4 ou 5, caractérisée en ce que ladite couche est à base de silice.

7. Utilisation selon l'une des revendications précédentes de la composition précitée dans des matières plastiques, des peintures, des lasures, des caoutchoucs, des papiers, des encres, des produits cosmétiques, des teintures, des liants minéraux et des revêtements stratifiés.

8. Utilisation selon l'une des revendications 4 à 6 de la composition précitée dans des céramiques ou des glacures.

9. Compositions de matière colorées notamment du type plastiques, peintures, lasures, caoutchoucs, céramiques, glaçures, papiers, encres, produits cosmétiques, teintures, liants minéraux et revêtements stratifiés, caractérisées en ce qu'elles comprennent une composition telle que définie à l'une quelconque des revendications 1 à 8.

10. Composition comprenant un composé de formule ATbO₃ et une couche enrobante à base d'au moins un oxyde transparent qui peut être plus particulièrement choisi parmi la silice, l'alumine, la zircone, le zircon, l'oxyde de titane et les oxydes de terres rares.
